(19) Europäisches Patentamt
European Patent Office
Office européen des brevets

(11) **EP 2 380 306 B1**

(12) **FASCICULE DE BREVET EUROPEEN**

(45) Date de publication et mention
de la délivrance du brevet:
**24.07.2013 Bulletin 2013/30**

(51) Int Cl.:
*H04L 9/00* (2006.01)    *H04L 9/06* (2006.01)

(21) Numéro de dépôt: **10701001.9**

(86) Numéro de dépôt international:
**PCT/EP2010/050546**

(22) Date de dépôt: **18.01.2010**

(87) Numéro de publication internationale:
**WO 2010/084106 (29.07.2010 Gazette 2010/30)**

(54) **CIRCUIT DE CRYPTOGRAPHIE PROTEGE CONTRE LES ATTAQUES EN OBSERVATION, NOTAMMENT D'ORDRE ELEVE**

KRYPTOGRAFIESCHALTUNG MIT SCHUTZ VOR BEOBACHTUNGSANGRIFFEN, IM BESONDEREN HÖHERER ORDNUNG

CRYPTOGRAPHY CIRCUIT PROTECTED AGAINST OBSERVATION ATTACKS, IN PARTICULAR OF A HIGH ORDER

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **20.01.2009 FR 0950341**

(43) Date de publication de la demande:
**26.10.2011 Bulletin 2011/43**

(73) Titulaire: **Institut Telecom - Telecom Paristech**
**75013 Paris (FR)**

(72) Inventeurs:
• **DANGER, Jean-Luc**
  **F-92160 Antony (FR)**
• **GUILLEY, Sylvain**
  **F-75013 Paris (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
EP-A- 1 398 901    EP-A- 1 995 906
WO-A-01/61916    US-A1- 2008 260 145

• **HOUSSEM MAGHREBI ET AL: "Evaluation of countermeasure implementations based on Boolean masking to thwart side-channel attacks", SIGNALS, CIRCUITS AND SYSTEMS (SCS), 2009 3RD INTERNATIONAL CONFERENCE ON, IEEE, PISCATAWAY, NJ, USA, 6 novembre 2009 (2009-11-06), pages 1-6, XP031627503, ISBN: 978-1-4244-4397-0**
• **GEBOTYS C: "Third Order Differential Analysis and a Split Mask Countermeasure for Low Energy Embedded Processors", INTERNET CITATION, [Online] XP002455442, Extrait de l'Internet: URL: http://www.cacr.math.uwaterloo.ca/tech reports/ 2004/cacr2004-11.pdf> [extrait le 2007-10-18]**
• **GOUBIN L ET AL: "DES AND DIFFERENTIAL POWER ANALYSIS THE DUPLICATION METHOD", CRYPTOGRAPHIC HARDWARE AND EMBEDDED SYSTEMS. 1ST INTERNATIONAL WORKSHOP, CHES'99. WORCESTER, MA, AUG. 12 - 13, 1999 PROCEEDINGS; [LECTURE NOTES IN COMPUTER SCIENCE], BERLIN : SPRINGER, DE, vol. 1717, 1 août 1999 (1999-08-01), pages 158-172, XP000952192, ISBN: 978-3-540-66646-2**

**Description**

La présente invention concerne un circuit de cryptographie protégé contre les attaques en observation. Elle s'applique notamment pour la protection de circuits de cryptographie contre les attaques en observation d'ordre élevé sur des implantations à base de masquage.

La cryptographie a notamment pour buts de protéger :

- soit la confidentialité d'une information, par le moyen du chiffrement et de l'opération duale : le déchiffrement ;
- soit seulement l'authenticité d'une information, par les opérations de signature et de vérification, par les opérations de signature et de vérification des signatures.

La cryptographie utilise des méthodes mathématiques, dont il a été démontré qu'elles conduisent à des systèmes sûrs. Par exemple, un chiffrement est réputé sûr lorsqu'il est prouvé qu'il n'existe pas, dans l'état actuel des connaissances publiées, de méthodes d'attaque significativement plus rapide que l'attaque exhaustive, correspondant à l'essai de toutes les clés possibles.

En général, les méthodes de chiffrement impliquent des calculs complexes, nécessaires à la sécurité des systèmes. Cette complexité ne pose pas de problèmes particuliers aux ordinateurs mais est un grave inconvénient dans le cas de dispositifs ne comportant pas de grande puissance de calcul, généralement animés par des microprocesseurs « 8 bits », à faible coût. Les conséquences peuvent être de plusieurs ordres, comme :

- une entrave au bon usage, un exemple typique serait une carte bancaire mettant plusieurs minutes à signer une facture ;
- un déni de service, un exemple typique serait un décodeur de télévision payante ne pouvant pas suivre le débit d'information délivrée.

Pour pallier cette difficulté sans augmenter le prix des systèmes, il est habituel d'adjoindre un système d'aide à l'unité centrale du dispositif utilisé, sous la forme d'un coprocesseur dédié à la cryptographie.

Cependant, qu'il soit mis en oeuvre par l'unité centrale ou par un coprocesseur spécialisé, l'algorithme de cryptographie est mis en oeuvre par un dispositif physique, actuellement de type électronique. Ces dispositifs physiques présentent des imperfections inévitables, liées à des propriétés inhérentes aux lois de base de l'électricité.

C'est ainsi que des systèmes de cryptographie sûrs du point de vue mathématique peuvent être attaqués par l'exploitation des imperfections inhérentes des systèmes physiques mettant en oeuvre l'algorithme, ainsi :

- la durée des calculs peut dépendre des valeurs des données, en particulier sur des systèmes logiciels optimisés en vitesse, ce qui a donné lieu aux attaques de type « Timing Attack » décrites notamment dans le document de P.Kocher et al : Timing Attack on Implementation of Diffie-Hellman, RSA, DSS and other systems, In Proceedings of CRYPTO'96, volume 1109 of LNCS, pages 104-113, Springer-Verlag, 1996, ces attaques permettant dans certains cas de retrouver la totalité des clés secrètes à partir de simples mesures de temps d'exécution ;
- la consommation instantanée peut également dépendre des données, ce qui a donné lieu à une série d'attaques telles que :

  - l'attaque SPA (Simple Power Analaysis) décrite notamment dans le document de Thomas S. Messerges et al: Investigations of Power Analysis Attacks on Smartcards, In USENIX - Smartcard'99, pages 151-162, May 10-11, 1999, Chicago USA, cette attaque tentant de différentier les opérations exécutées par une unité centrale à partir d'une mesure de sa consommation électrique mesurée pendant une opération cryptographique ;
  - l'attaque DPA (Differential Power Analysis) décrite notamment dans le document de S.Guilley et al: Differential Power Analysis Model and some Results, In Proceedings of WCC/CARDIS, pages 127-142, Aug 2004, Toulouse, France, cette attaque utilisant des opérations statistiques sur de nombreuses mesures de consommation électrique, effectuées lors d'opérations cryptographiques sur des messages aléatoires et avec une clé constante, pour valider ou invalider une hypothèse faite sur une partie limitée de la clé ;

- tout courant électrique circulant dans un conducteur engendre un champ électromagnétique dont la mesure peut donner lieu à des attaques de type EMA (ElectroMagnetic Attack) identiques dans leur principe aux attaques portant sur la consommation électrique ;
- certaines attaques perturbent intentionnellement le fonctionnement de systèmes afin d'exploiter les résultats erronés pour retrouver les secrets du système, ces attaques étant connues sous l'appellation attaques par injection de fautes.

On appelle canal caché toute imperfection d'un dispositif physique mettant en oeuvre un algorithme de cryptographie et susceptible de laisser fuir de l'information liée aux secrets conservés dans la mémoire du dispositif.

Des protections contre ces attaques sur les canaux cachés ont été proposées, sur la base notamment :

- de dissimulation, où il s'agit de rendre la fuite constante, en l'occurrence indépendante du secret ;
- de masquage, où il s'agit de rendre la fuite aléatoire, imprévisible donc inexploitable.

Ces deux techniques permettent de rendre plus difficile des attaques visant à retrouver de l'information, mais elles restent cependant vulnérables à des attaques qui tireraient profit de défauts d'implémentation. Il existe de nombreux exemples de vulnérabilités potentielles ou avérées, par exemple :

- la dissimulation à base de logique différentielle (comme WDDL) peut être vulnérable à une attaque sur des différences de délais combinatoires cumulatifs entre l'une ou l'autre des phases du calcul, phase d'évaluation et phase de précharge;
- le masquage, qui peut être sensible aux attaques d'ordre élevé, dite HO - DPA.

Un document WO 01/61916 A décrit une méthode de contre-mesure avec un masquage des données.

Le document XP 2 455 442: "Third order differential Analysis and split mask countermeasure for low Energy Embedded processor" décrit une contre mesure sur les attaques de troisième ordre à l'aide de plusieurs masques intermédiaires générés iterativement.

Un but de l'invention est notamment de permettre une protection efficace contre les attaques en observation d'ordre élevé. A cet effet, l'invention a pour objet un circuit de cryptographie comportant au moins un registre fournissant une variable $x$ masquée ($x \oplus m$) par une variable de masque ($m$), caractérisé en ce que ladite variable masquée est cryptée par une première boîte de substitution $S$ de façon cyclique, ledit circuit comportant un registre de masque délivrant à chaque cycle un masque transformé ($m_t$) lui-même transformé par une fonction de modification (41,61) en la variable de masque $m$, ladite fonction de modification étant une bijection ou une fonction de décomposition, à la fin d'un cycle ladite variable masquée ($x \oplus m$) étant transformée en un nouveau masque ($S(x) \oplus m'$) de ladite variable ($x$), cryptée par la première boîte de substitution $S$, par un nouveau masque ($m'$), ledit nouveau masque ($m'$) étant calculé en fonction de ladite variable de masque ($m$) et de ladite variable masquée ($x \oplus m$) à l'aide d'une deuximèe boîte de substitution $S'$.

Le nouveau masque transformé $m'_t$ est par exemple introduit dans le registre de masque M après avoir été soumis à la modification inverse en sortie de la deuxième boîte de substitution $S'$.

Dans un premier mode de mise en oeuvre possible, la modification peut être une bijection B telle que le masque transformé $m_t$ est stocké dans le registre M, le masque $m$ appliqué à la boîte de substitution valant $B(m_t)$ et la nouvelle valeur à stocker dans le registre étant $B^{-1}(m')$, $m'$ étant la sortie de la deuxième boîte de substitution $S'$ (21).

La bijection B est par exemple telle que le poids de Hamming du masque $m$ n'est pas toujours identique au poids de Hamming de son image par la bijection $B(m)$.

Dans un deuxième mode de mise en oeuvre possible, la modification du masque $m$ peut être effectuée par décomposition en deux sous-masque $m_1$ et $m_2$ telle que $m = m_1 \theta m_2$ où $\theta$ est une loi de composition de groupe, le premier sous-masque $m_1$ étant stocké dans un premier registre de masque M1 et le deuxième sous-masque $m_2$ étant stocké dans un deuxième registre de masque M2, la nouvelles valeur à stocker dans le registre M1 étant $m'_1 = m' \theta^{-1} m'_2$ et la nouvelle valeur à stocker étant $m'_2$, $m'$ étant la valeur du masque en sortie de la deuxième boîte de substitution $S'$.

La loi de composition est par exemple l'opération « ou exclusif » XOR, l'opération d'addition, l'opération de multiplication ou encore l'opération de type s=a*b + (a+b)/2 , * étant la multiplication et + l'addition.

La de composition a par exemple une distance de Hamming entre deux sous-masque consécutifs $m_2$ d'un cycle à l'autre, $\Delta m_2$, non nulle.

Les sous-masques $m_1$, $m_2$ ayant un nombre pair de bits, la loi de composition de groupe ($\alpha$) permettant d'obtenir le masque $m$ à partir des sous-masques $m_1'$, $m_2$ vérifie par exemple :

- $\Delta m_2 = 1$ par groupes de 2 bits ;
- $m = m_1 \oplus m_2$ si $m_2$ MSB = 1 ou $m = m_1$ si $m_2$ MSB = 0

$m_2$ MSB, $m_2$ LSB étant respectivement les bits de poids fort et de poids faible du sous-masque $m_2$.

Le circuit comporte par exemple un générateur de valeurs aléatoires, ledit générateur délivrant la valeur du deuxième sous-masque $m'_2$.

Ce sous-masque $m_1$ issu du premier registre de masque M1 peut être sauvegardé dans le deuxième registre de masque M2 en fin de cycle, le premier registre M1 recevant de son côté le nouveau masque $m'_1$ de façon à reconstruire le nouveau masque complet $m' = m'_1 \theta m'_2$.

L'algorithme de cryptage étant du type DES, le chemin des données $x$, $m$ étant scindé en deux parties, gauche et droite, ledit circuit comporte par exemple en plus du registre de masque gauche ML et du registre de masque droite MR un troisième registre de masque M, le registre MR contenant le sous-masque droit $m_{r1}$ et le registre ML contenant le sous-masque gauche $m_{l2}$' le registre M contenant le sous-masque $m_{r2}$ égal au sous-masque $m_{l1}$, les valeurs effectives du masque droit $m_r$ et du masque gauche $m_l$ étant telles que :

- $m_r = m_{r1} \; \theta \; m_{r2}$
- $m_l = m_{l1} \; \theta \; m_{l2}$

La deuxième boîte de substitution $S'$ comporte par exemple deux boîtes identiques à la première boîte de substitution $S$ et deux portes XOR, les sortie des deux boîtes étant connectées à une porte XOR dont la sortie délivre le nouveau masque $m'$, la variable masquée ($x \oplus m$) entrant sur une boîte et sur l'autre porte XOR dont l'autre entrée reçoit le masque $m$, la sortie de cette porte entrant sur l'autre boîte.

Une mémoire ROM réalise par exemple la logique des portes XOR et la substitution des boîtes.

D'autres caractéristiques et avantages de l'invention apparaîtront à l'aide de la description qui suit faite en regard de dessins annexés qui représentent :

- les figure 1a et 1b, une illustration du principe de masquage d'une boîte de substitution ;
- la figure 2, une illustration du masquage au niveau d'une boîte de substitution ;
- la figure 3, une présentation d'un exemple de distribution d'activité en sortie d'un registre pour différentes valeurs de la distance de Hamming entre deux mots consécutifs d'une variable $x$ du registre ;
- la figure 4, une illustration d'un premier mode de modification possible du chemin d'un masque dans un circuit selon l'invention ;
- la figure 5, une présentation de la distribution d'activité correspondant au mode précédent ;
- la figure 6, une illustration d'un deuxième mode de réalisation possible du chemin d'un masque dans un circuit selon l'invention ;
- la figure 7,une présentation de la distribution d'activité correspondant au mode précédent ;
- la figure 8, un exemple de modification avec décomposition des masques sans utilisation d'un générateur aléatoire ;
- la figure 9, un exemple de réalisation de masquage selon l'invention dans le cas d'utilisation d'un algorithme DES ;
- la figure 10, un exemple de réalisation d'une loi de composition de groupe utilisée dans un circuit selon l'invention ;
- les figures 11 a, 11 b et 11 c, des exemples de réalisation d'une deuxième boîte de substitution utilisée dans un circuit selon l'invention.

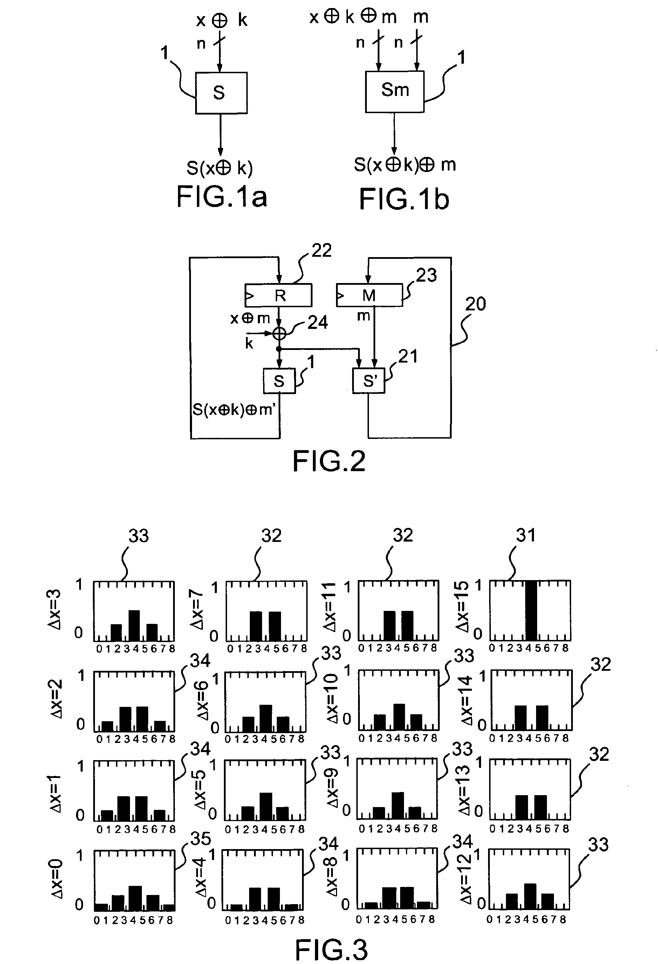

Les figures 1a et 1b illustrent le principe du masquage d'une boîte de substitution 1, appelée généralement « S-box », avec un masque constant m. Une S-box applique à un message une fonction non-linéaire ayant notamment pour but de rendre le message entropique en sortie de la S-box.

Dans la figure 1 a, une donnée $x$ est combinée en entrée de la S-box 1 avec une clé de cryptographie $k$. Dans cet exemple la donnée et la clé sont combinées par une opération logique « ou exclusif » encore appelée xor et qui sera notée par la suite $\oplus$. Dans le cas de la figure 1 a, le message $x \oplus k$ codé sur n bit par exemple, est donc présenté en entrée de la S-box. Le message de sortie correspondant est $S(x \oplus k)$.

La figure 1 b montre le masquage de la S-box avec un masque constant $m$. La technique du masquage repose sur le brouillage des variables internes sensible dépendant d'un secret par un masque $m$. Dans l'exemple des figures 1a et 1b, $x$ est une telle variable. Etant donné que $m$ est imprévisible par un attaquant, les fuites sont inexploitables dans le cadre d'une attaque directe sur $x$. La variable $x$ n'existe plus en tant que telle mais peut être reconstruite par la paire de signaux ($m, x_m$) où $x_m = x \, \theta \, m$ est la variable à masquer et $\theta$ est un opérateur de groupe qui peut être notamment logique ou arithmétique. Dans l'exemple de la figure 1 b, le masquage utilise la fonction xor, soit $x_m = x \oplus m.$

Ce type de masquage est particulièrement adapté pour la protection des algorithmes DES (Data Encryption Standard) et AES (Advanced Encryption Standard), où les opérations linéaires sont effectuées dans un corps binaire. Le masque peut être appliqué aux variables internes qui sont généralement des vecteurs de bits, des mots, des fonctions cryptographiques. Le masquage au niveau d'un mot le rend applicable aussi bien aux implémentations logicielles que matérielles. La réalisation du masquage est simple quand la fonction $f$ où s'applique la variable masquée est linéaire en fonction de la loi de groupe, soit $f(x \, \theta \, m) = f(x) \, \theta \, f(m)$.

La valeur de $f(x)$ peut être reconstruite à partir de $f(x \, \theta \, m)$ et $m$. $f(x)$ est ainsi extrait en toute fin de l'algorithme de façon à éviter une fuite d'information émanant de la variable $x$. Les calculs sur $x \, \theta \, m$ et $m$ étant décorrélés de $x$, il n'y a pas de fuites directes de secret.

Si la fonction $f$ est non linéaire, le mécanisme de masquage devient plus complexe car $f(x)$ ne peut pas être recréée mathématiquement à partir de $f(x \, \theta \, m)$ et $f(m)$. Dans les algorithmes de chiffrement symétrique, la partie non linéaire correspond aux boîtes de substitution ou S-box, ainsi par exemple la S-box 1 des figures 1a et 1b. Une technique courante en logiciel utilise une mémoire ROM générant la fonction non linéaire de la S-box, cette fonction étant notée

$S_m$, telle que :

$$S_m(x \oplus m) = S(x) \oplus m$$

$S$ étant la fonction de la S-box avant masquage.

En conséquence, la taille de la mémoire passe de $2^n$ pour $S$ à $2^{2n}$ pour $S_m$, n étant le nombre de bit du masque. Les figures 1a et 1b illustrent ce changement.

Cette réalisation n'est pas sécurisée avec une implantation matérielle où une itération de l'algorithme de chiffrement est effectuée en un cycle d'horloge. Dans ce cas, les transferts au niveau d'un registre démasquent automatiquement les données. En effet, en considérant à titre d'exemple l'opérateur $\oplus$, un transfert peut être décrit par la relation suivante :

$$x \oplus m \quad \oplus \quad S(x) \oplus m = x \oplus S(x)$$

Le terme $x \oplus m$ de cette relation est la valeur initiale en entrée de la S-box $S_m$, et le terme $S(x) \oplus m$ est la valeur finale en sortie de la S-box, l'opérateur $\oplus$ entre ces deux termes indiquant la transition. La relation précédente montre bien que le résultat de la transition $x \oplus S(x)$ est indépendant du masque $m$.

L'efficacité procurée par le masquage peut être prouvée contre les attaques de premier ordre qui ne considère que la variable interne $x$, comme le montre notamment le document de J.Blomer et al : Provably Secure Masking of AES, In LNCS, editor, Proceedings of SAC'04, volume 3357, pages 69-83, Springer, August 2004, Waterloo, Canada. Les fuites d'information émanant du circuit de masquage peuvent cependant être soumises à une attaque du second ordre, voire d'un ordre supérieur beaucoup plus élevé.

Une attaque du second ordre considère deux variables $x_1$ et $x_2$. Par exemple si $x_1$ et $x_2$ sont masquées par le même masque, l'attaque du second ordre tire parti du fait que $x_1 \oplus x_2 = x_1 \oplus m \oplus x_2 \oplus m.$

Des implémentations ont été étudiées pour surmonter des attaques d'ordre élevé, comme le montre notamment le document de M.Akkar et al : A generic protection against High-oder differential Power Analysis, In LNCS, editor, Proceedings of FSE'03, volume 2887 of LNCS, Springer, 2003, Berlin, ce document utilisant des masques constants. Cependant, pour obtenir une efficacité importante une forte augmentation de la complexité est nécessaire. A titre d'exemple, il a été démontré que l'algorithme DES nécessite au moins trois masques différents et six S-box additionnelles pour chaque S-box afin d'être résistant aux attaques d'ordre élevé par cette méthode, comme le montre le document de J.Lv et al, Enhanced DES implementation secure against differential power analysis in smart-cards, In Information Security and Privacy, 10th Australasian Conference, volume 3574 of LNCS, pages 195-206, Brisbane, July 2005, Springer Verlag.

Dans une autre méthode connue, un nouveau masque $m$ est calculé à chaque itération. Cette méthode est notamment décrite dans le document de F-X.Standaert et al, FPGA Implementations of the DES and Triple-DES Masked Against Power Analysis Attack, In Proceedings of FPL 2006, August 2006, Madrid. La variable masquée $x \oplus m$ d'un registre R est associée à chaque tour à un nouveau masque $m$ issu d'un registre M. Ainsi à la fin d'un tour, la variable $x \oplus m$ est transformée en $S(x) \oplus m'$ où le nouveau masque $m'$ est calculé en fonction de $m$ et de $x \oplus m$ à l'aide d'une nouvelle S-box de fonction $S'$. Cette méthode offre un bon compromis de complexité car elle n'associe qu'une seule nouvelle S-box $S'$ à chaque S-box S existante.

Cette implémentation reste cependant sujette à des attaques du second ordre comme le montre notamment le document de E.Peeters et al, Improved Higher-Order Side-Channel Attacks with FPGA Experiments, In CHES, volume 3659 of LNCS, pages 309-323, Springer-Verlag, 2005.

La figure 2 illustre l'implémentation des S-box S et S'. Un registre 22, noté R, fournit la variable masquée $x \oplus m$ à laquelle est combinées la clé $k$, par exemple par une porte XOR 24, en entrée de la S-box 1, de fonction $S$, qui délivre en sortie la variable $S(x \oplus k) \oplus m'$ qui est rebouclée sur l'entrée du registre 22, R. En parallèle, un registre 23, noté M, fournit le masque $m$ qui entre dans la S-box 21, de fonction S', l'autre entrée de cette dernière étant commune à l'entrée de la S-box 1. La sortie de la S-box 21, $S'$, délivre un nouveau masque $m'$ et est rebouclée sur l'entrée du registre M. Ce nouveau masque est utilisé pour masquer la variable $x$ délivrée par le registre R. Dans toute la suite de la description, les masques produits par la boucle de masque 20 comportant le registre de masque 23 et la S-box 21, $S'$ seront utilisés pour masquer la variable $x$.

Les rebouclages sur les registres R et M se font chacun en un coup d'horloge. Pour des raisons de simplicité, la représentation de la figure 2 fait abstraction des fonctions d'expansion et de permutation propres à l'algorithme DES.

L'attaque HO-DPA décrite dans Peeters et al porte sur les variables $x \oplus m$ et $m$ qui sont issues de registres. Le principe consiste à étudier les distributions de l'activité en sortie de registres pour différents valeurs de la variable $x$.

En logique CMOS, un modèle d'activité noté *A* peut être la distance de Hamming notée *DH* entre deux mots consécutifs. En particulier :

$$A(x \oplus m, m) = DH(x_i \oplus m_i, x_{i-1} \oplus m_{i-1}) + DH(m_i, m_{i-1}) \qquad (1)$$

Soit

$$A(x \oplus m, m) = PH(\Delta x \oplus \Delta m) + PH(\Delta m) \qquad (2)$$

*PH* correspond au poids de Hamming et $\Delta x$ à la distance de Hamming entre deux mots consécutifs $x_i, x_{i-1}$ de la variable *x*.

Si *x* et *m* ont un seul bit, l'activité correspond à 2. *PH(∆m)* si $\Delta x = 0$.

Si $\Delta x = 1$, l'activité correspond à $PH(\overline{\Delta m}) + PH(\Delta m)$ et vaut constamment 1. La connaissance des distributions de consommation pour chaque $\Delta x$ permet ainsi de construire l'attaque HO-DPA en observant les distributions de consommation et en les comparant à l'activité prédite pour une hypothèse de clé *k* incluse dans la variable *x*.

Si *x* et *m* sont codés sur 4 bits, le poids de Hamming *PH* peut prendre cinq valeurs : 0, 1, 2, 3, 4. Donc l'activité $A(x \oplus m, m) = PH(\Delta x \oplus \Delta m) + PH(\Delta m)$ peut prendre neuf valeurs : 0, 1, 2, 3, 4, 5, 6, 7, 8.

La figure 3 illustre les distributions de l'activité *A* pour un masque de 4 bits pour les différentes valeurs de $\Delta x$ possible, $\Delta x$ prenant dans ce cas les $2^4$ valeurs 0, 1, 2, 3, 4, 5, 6, 7, 8, 9, 10, 11, 12, 13, 14, 15. La figure 3 présente donc cinq distributions différentes 31, 32, 33, 34, 35 pour l'ensemble des valeurs de $\Delta x$.. Dans chaque distribution 31, la valeur de $\Delta x$ est distribuée, ou répartie, en fonction de l'activité qui peut prendre les neuf valeurs 0, 1, 2, 3, 4, 5, 6, 7 et 8. Il apparaît de nettes différences entre ces distributions, ces différences pouvant être exploitées par une attaque HO-DPA.

Pour comparer l'efficacité de différents solutions de masquage, on peut utiliser une grandeur métrique de comparaison des distributions 31, 32, 33, 34, 35 inspirée d'un test connu, le test du $\chi 2$, défini par la relation suivante :

$$\chi 2 = \sum_{i=1}^{C} \frac{(P_i - P_i ref)^2}{P_i ref} = \frac{1}{N} \sum_{i=1}^{C} \frac{(N_i - N_i ref)}{N_i ref} \qquad (3)$$

où :

- C représente le nombre de classes de la distribution, par exemple C = 9 pour les distributions d'activité avec un masque codé sur 4 bits, C - 1 représentant le degré de liberté de la loi du $\chi 2$ ;
- N est le nombre total d'échantillons ;

- $P_i$ est la probabilité observée d'avoir un élément dans la classe *i*, $P_i$ est aussi égale à $\dfrac{N_i}{N}$ , , $N_i$ étant le nombre d'éléments observés dans la classe *i* ;

- $P_i ref$ est la probabilité de référence d'avoir un élément dans la classe *i*, $P_i ref$ étant aussi égale à $\dfrac{N_i ref}{N}$ , $N_i ref$ étant le nombre d'éléments attendus dans la classe *i*.

On considère la distribution de référence comme étant la moyenne des 16 distributions obtenues pour toutes les valeurs de $\Delta x$ quand le masque est codé sur 4 bits. La valeur de $\chi 2$ dans ce cas permet de juger de l'homogénéité de toutes les distributions. A titre de référence, $\chi 2$ vaut 21,89 pour la distribution avec un masque de 4 bits. Il faut que cette valeur soit la plus faible possible pour éviter des discriminations entre les distributions 31, 32, 33, 34, 35 susceptibles d'être exploitées par des attaques HO-DPA. En d'autres termes, il faut que cette valeur du $\chi 2$ soit la plus faible possible pour se prémunir des attaques HO-DPA.

L'invention permet de se prémunir contre de telles attaques d'observation, y compris d'ordre élevé, en réduisant les discriminations, ou les différences, entre les différentes distributions d'activité pour un même masque. On considèrera par la suite, à titre d'exemple, un masque codé sur 4 bits.

En particulier, en se référant par exemple à la figure 2, l'invention rend l'activité du registre M contenant le masque *m* indépendante de l'activité du registre R contenant la variable masquée $x \oplus m$. Si la variable *x* n'influe pas sur les distributions de consommation propres à ces deux registres 22, 23, il n'est plus possible de mener avec succès une attaque HO-DPA comme celle décrite dans le document de Peeters et al. L'équilibre peut se faire en modifiant la structure du chemin du masque sans toucher au chemin de la variable masquée. Les modifications proposées peuvent se faire soit dans l'espace, en transformant le masque, soit dans le temps, en changeant l'évolution du masque. Avantageusement, l'invention concerne la transformation du masque. Selon l'invention, plusieurs modifications de masque sont possibles.

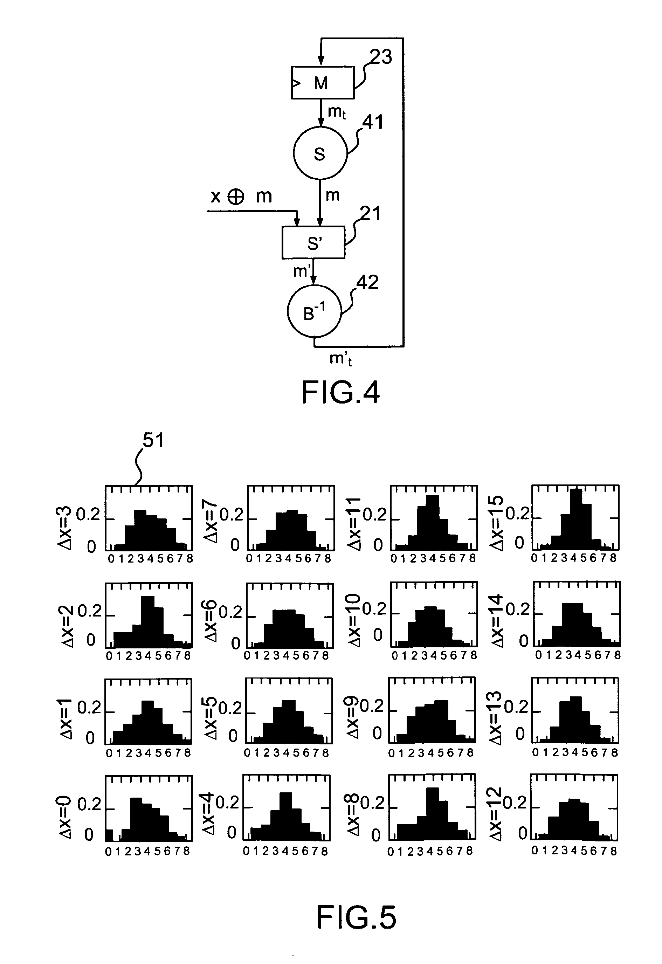

La figure 4 illustre une première modification possible du masque, une modification par bijection. Dans ce cas, une transformation bijective 41, notée *B* est intercalée entre le registre de masque 23, registre M, et la S-box 21, de fonction *S'*. La transformation bijective inverse 42, notée $B^{-1}$, est appliquée en sortie de la S-box. Ainsi, le masque *m'* délivré par la S-box *S'* subit la transformation bijective $B^{-1}$ avant d'être stocké dans le registre M. La bijection est telle que la distance de Hamming entre *m* et son image *B(m)* ne soit pas toujours nulle de façon à modifier la corrélation de l'activité entre la variable $x \oplus m$ et *B(m)*. L'implémentation de la bijection *B* peut se faire par une table prédéfinie.

Le masque *m'* en sortie de S-box *S'* est celui effectivement utilisé par la variable masquée. La figure 4 illustre le chemin du masque.

La figure 5 montre les 16 distributions 51 obtenues après transformation du masque par une bijection telle qu'illustrée par la figure 4, pour les 16 valeurs de $\Delta x$ pour un masque codé sur 4 bits comme dans le cas de la figure 3, donc avec les mêmes valeurs d'activité pouvant aller de 0 à 8. Ces distributions 51 présentent de faibles différences entre elles, contrairement aux distributions de la figure 3. Les distributions de l'activité sont beaucoup plus homogènes, ce qui est confirmé par le test du $\chi 2$ qui donne une valeur moyenne de 1,85 avec cette transformation bijective, à comparer à la valeur de 21,89 correspondant à la distribution de la figure 3.

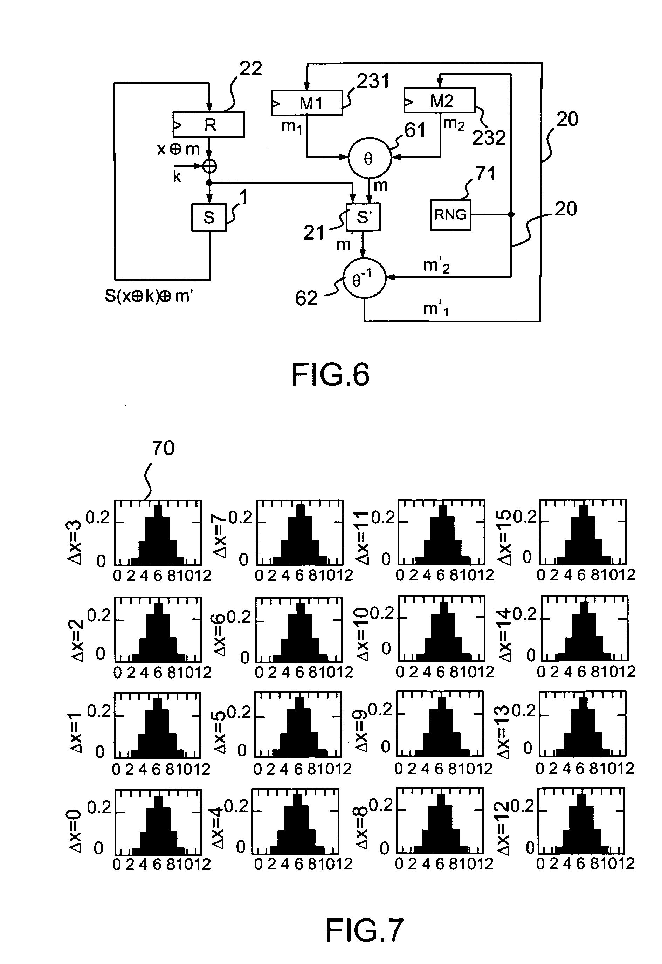

La figure 6 illustre une autre modification possible selon l'invention. Il s'agit d'une modification du masque par décomposition. Dans ce cas, le masque *m* est décomposé en deux sous-masques $m_1$ et $m_2$ tels que :

$$m = m_1 \; \theta \; m_2$$

$\theta$ réalisant une loi de composition interne de groupe, comme l'opérateur $\theta$ évoqué précédemment. $\theta$ étant un opérateur de groupe, il admet un opérateur inverse $\theta^{-1}$.

Le registre M des figures précédentes est donc remplacé par deux registres 231, 232. Un registre M1 contient la valeur $m_1$ et un registre M2 contient la valeur $m_2$. La sortie de ces registres est reliée à un circuit 61 réalisant la loi de composition $\theta$. En sortie de cet opérateur 61, le masque *m* est recomposé par l'opération $m = m_1 \theta m_2$ avant d'être transformé en un nouveau masque *m'* par la S-box *S'*, 21 comme dans les chemins précédents illustrés notamment aux figures 2 et 4.

L'opération inverse $\theta^{-1}$ est effectuée par un opérateur 62 placé en sortie de la S-box *S'* 21. Cet opérateur permet de séparer le masque *m'* en $m'_1$ et $m'_2$ tel que $m'_1 = m' \theta^{-1} m'_2$. Le masque *m'*, peut être généré par un générateur aléatoire RNG comme illustré dans la figure 6. A chaque itération de l'algorithme de chiffrement le registre M2 contenant $m_2$ prend une nouvelle valeur $m'_2$ provenant du générateur aléatoire 71. Le registre M1 contenant $m_1$ prend une nouvelle valeur $m'_1 = m' \theta^{-1} m'_2$, cette valeur est délivrée par l'opérateur 62 qui effectue l'opération de groupe $\theta^{-1}$ à partir de la donnée d'entrée *m'* fournie par la S-box 21 et la donnée d'entrée $m'_2$ fournie par le générateur aléatoire 71.

L'activité A au niveau du registre R contenant la variable masquée $x \oplus m$ et des deux registres M1 et M2 devient donc :

$$A(x \oplus m) = PH(\Delta x \oplus \Delta m) + PH(\Delta m_1) + PH(\Delta m_2) \qquad (4)$$

En considérant ce modèle d'activité, le test du $\chi 2$ est appliqué pour différentes lois $\theta$ et les résultats sont illustrés, à titre d'exemple, par le tableau ci-dessous :

| $\theta$ | Sans modifications | B(a) | A XOR b | a+b | a*b | a*b+ (a+b)/2 | a$\alpha$b |
|---|---|---|---|---|---|---|---|
| $\chi 2$ | 21,89 | 1,85 | 16,69 | 0,31 | 0,36 | 0,18 | 0 |

Ce tableau montre que les opérateurs simples comme l'addition + et la multiplication * peuvent être utilisés pour obtenir des distributions équilibrées, les résultats obtenus étant respectivement 0,31 et 0,36, ce qui repousse l'attaque à un nombre de traces de consommation à acquérir extrêmement élevé pour discriminer les distributions entre elles. La transformation par bijection B permet d'obtenir un résultat de 1,85.

Avantageusement la loi $\alpha$, décrite par la suite, permet d'avoir un $\chi 2$ nul c'est-à-dire des distributions parfaitement identiques au sens du modèle d'activité considéré et donc résistant aux attaques d'ordre élevé.

La figure 7 illustre les 16 distributions possibles 70 avec 4 bits par variable et en considérant la loi $\alpha$.

les distributions obtenues avec l'opérateur logique XOR ne permettent pas de réduire suffisamment la valeur de $\chi 2$ car elles font apparaître deux grandes classes de distribution en fonction de la parité du poids de Hamming de $\Delta x$, $PH(\Delta x \oplus m)$. Si $\Delta x$ est pair, l'activité a toujours des valeurs paires alors que si $\Delta x$ est impair l'activité a toujours des valeurs paires.

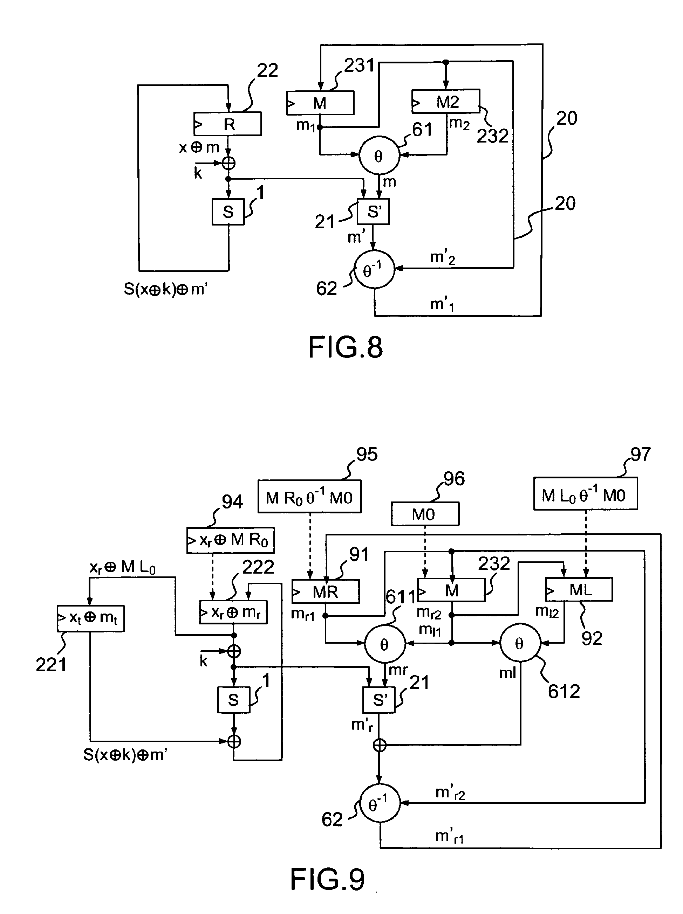

La figure 8 illustre un exemple de mise en oeuvre qui donne un résultat analogue à la solution précédente mais sans utilisation d'un générateur aléatoire, à part pour initialiser le calcul. De façon à éviter le surcoût lié à l'utilisation d'un générateur aléatoire à chaque cycle, un des deux sous-masques peut remplacer la variable aléatoire générée dans l'exemple précédent. On peut par exemple utiliser le sous-masque issu du registre M1, 231. Ce sous-masque issu du registre M1 est sauvegardé dans le registre M2, 232, en fin de cycle, le registre M1 recevant de son côté le nouveau masque $m'_1$ de façon à reconstruire le masque complet. Ainsi, le nouveau masque généré à chaque cycle est $m' = m'_1 \theta m_1$, au cycle suivant le nouveau masque généré est $m'' = m'_1 \theta m'_1$ et ainsi de suite.

La figure 9 illustre un exemple de masquage pour l'algorithme DES. Sur cette figure les fonctions d'expansion et de permutation ont été ignorées à des fins de lisibilité.

En ce qui concerne l'algorithme DES, le chemin des données est scindé en deux parties, gauche et droite, comme dans tout schéma de Feistel. En particulier, le registre de variables masquées 22 des exemples précédents est scindé en deux registres, un registre gauche 221 et un registre droit 222. En ce qui concerne la partie de masquage, en plus des deux registres de masque 91, 92, l'un registre droite MR et l'autre registre gauche ML, un troisième registre 93, noté M, est ajouté de façon à décomposer les deux masques gauche et droite. L'implémentation de l'algorithme DES tire parti de la solution exposée précédemment, relativement aux figures 7 et 8, sans utiliser de générateur aléatoire à chaque cycle mais en utilisant trois registres chaînés. Le registre MR contient le sous-masque $m_{r1}$ et le registre ML contient le sous-masque $m_{l2}$. Le registre M contient le sous-masque $m_{r2}$ égal au sous-masque $m_{l1}$. Les valeurs effectives des masques droit $m_r$ et gauche $m_l$ respectivement contenus dans les registres MR et ML sont données par les relations suivantes :

- $m_r = m_{r1} \theta m_{r2}$
- $m_l = m_{l1} \mu\theta m_{l2}$

Des opérateurs 611, 612 réalisant la relation de groupe $\theta$ sont placés en sortie des registres MR, M, ML pour effectuer les deux opérations précédentes. Le masque droit $m_r$ est transformé par la S-box S', 21 en un nouveau masque droit $m'_r$, l'autre entrée de la S-box 21 étant la variable masquée $x_r \oplus m_r$ puis cryptée venant du registre R droit 222. Le nouveau masque droit $m'_r$ est combiné avec le masque $m_l$ pour donner $m'_r \oplus m_l$ en entrée de l'opérateur 62 réalisant l'opération $\theta^{-1}$. Ce dernier combine $m'_r \oplus m_l$ avec $m'_{r2}$. De façon analogue à l'exemple de la figure 8, le sous-masque $m'_{r2}$ en entrée de l'opérateur 62 n'est pas fourni par un générateur aléatoire mais est égal au sous-masque $m_{r1}$ délivré par le registre MR. Chaque registre 221, 222, 91, 92, 93 reçoit une valeur initiale 94, 95, 96, 97. Le tableau ci-dessous présente les masques utilisés aussi bien dans les registres de masques 91, 92, 93, dans les trois dernières colonnes que dans les registres de variables masquées 221, 222, dans les deux colonnes précédentes, pour trois tours consécutifs :

| Tour | Masque droit | Masque gauche | MR | M | ML |
|------|------|------|------|------|------|
| 0 | $ML0$ | $MR0$ | $M0$ | $MR0 \; \theta^{1} \; M0$ | $ML0 \; \theta^{1} \; M0$ |
| 1 | $MR0$ | $m'_r$ | $MR0 \; \theta^{1} \; M0$ | $m'_{r1}$ | $M0$ |
| 2 | $m'_r$ | $m''_r$ | $m'_{r1}$ | $m''_{r1}$ | $MR0 \; \theta^{1} \; M0$ |

Ce tableau montre que les masques utilisés dans les registres de masques ainsi que ceux utilisés dans les registres de variables masquées sont différents et permettent en conséquence d'éviter notamment une attaque du type HO-DPA.

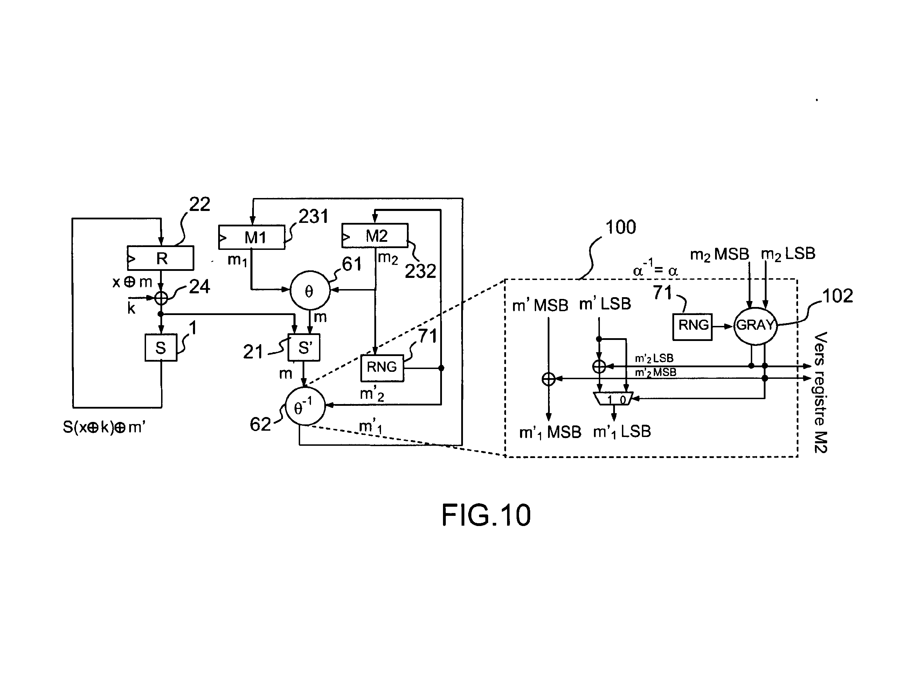

Une implémentation de la fonction $\alpha$ permettant d'avoir des distribution équilibrées, donc $\chi 2$ nul, un est illustrée par la figure 10

Cette loi repose sur le fait que $\Delta m_2$ n'est jamais nul. En effet si la variation de $m$, $\Delta m = \Delta m_2 = 0$, la loi de groupe $\theta$ fait que $\Delta m_1$ est aussi égal à 0. Dans ce cas, l'activité donnée par l'équation (4) précédente ne peut être nulle que si

$\Delta x$ est nul. Comme il n'existe pas d'autres valeurs de $\Delta x$ pour obtenir une activité nulle, ceci montre que l'activité ne sera jamais parfaitement équilibrée pour tous les $\Delta x$. En revanche, si la valeur de $\Delta m_2$ est non nulle, il peut exister des lois permettant de vérifier l'équilibre parfait des distributions d'activité et ainsi obtenir $\chi 2 = 0$. Par rapport à la preuve d'impossibilité de masquage, telle qu'envisagée notamment dans le document de G.Piret et al : Security Analysis of Higher-Order Boolean Masking Schemes for Block Ciphers, IET Information Security, 2(1) :1-11, 2008, l'invention prévoit une relation de liaison entre les deux masques $m_1$ et $m_2$, ce qui n'est pas pris en compte dans le document de G.Piret et al.

En considérant à titre d'exemple les sous-masques par paquets successifs de 2 bits, le masque ayant alors un nombre pair de bits, ce qui est souvent le cas, la loi suivante appelée $\alpha$ permet d'obtenir une distribution équilibrée quels que soient les $\Delta x$. Le groupe de 2 bits formé du bit de poids fort du sous-masque $m_2$, noté $m_2MSB$, et du bit de poids faible, noté $m_2LSB$, conditionne de la façon suivante la génération du masque par la loi $\alpha$ :

- $\Delta m_2 = 1$ par groupes de 2 bits ;
- $m = m_1 \oplus m_2$ si $m_2\, MSB = 1$ ou $m = m_1$ si $m_2\, MSB = 0$

Cette loi $\alpha$ est involutive et est mise en oeuvre par l'opérateur 61 en entrée de la S-box 21.

La figure 10 présente par ailleurs un exemple d'implémentation possible 100 de l'opérateur 62, situé en sortie de la S-box 21, mettant en oeuvre la fonction $m'_1 = m'\, \alpha^{-1}\, m'_2$ pour un groupe de 2 bits de masque.

Le circuit 100 utilise un générateur aléatoire 101 pour produire le sous-masque $m_2$. La variable aléatoire délivrée par ce générateur 101 sélectionne, dans un codeur 102 qui reçoit en entrée $m'_2\, MSB$ et $m'_2\, LSB$, soit une incrémentation soit une décrémentation sur le registre M2 qui est codé en Gray (ou code binaire réfléchi) de façon à assurer la condition $\Delta m'_2 = 1$. Partant du masque $m'$ produit par la S-box 21, l'opérateur 62 délivre un sous-masque $m'_1$ dont le bit de poids fort $m'_1\, MSB$ est égal à $m'MSB \oplus m'_2\, MSB$, $m'MSB$ étant le bit de poids fort de $m'$ et $m'_2\, MSB$ prenant la valeur 0 ou 1 selon la variable aléatoire générée en entrée du codeur 102. Le bit de poids faible $m'_1\, LSB$ est égal à $m'MSB$ ou à $m'LSB \oplus m'_2\, LSB$ si la valeur de $m'_2\, MSB$ est respectivement égale à 0 ou à 1.

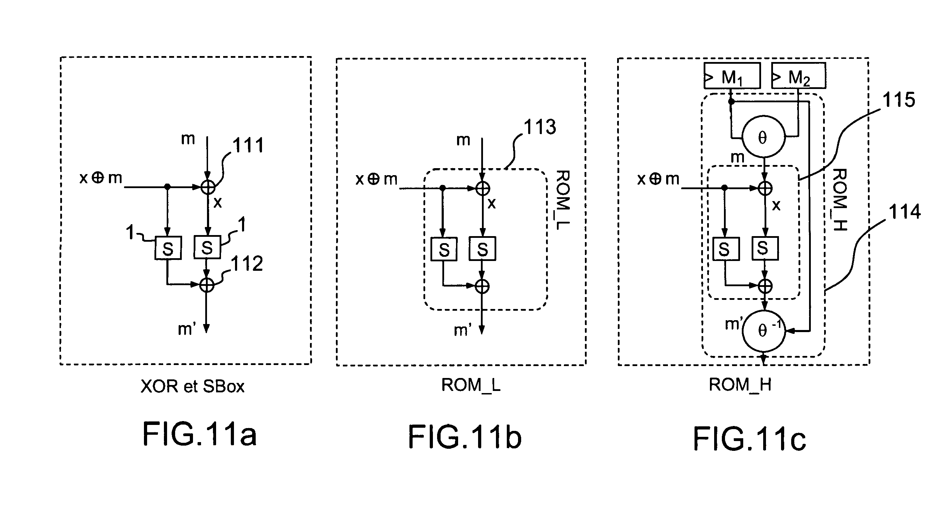

Les figures 11 a, 11 b et 11 c présentent des améliorations possibles pour réaliser la boîte de substitution S', 21 réalisant le nouveau masque $m'$. La boîte S' peut être réalisée avec un mélange de portes XOR et de mémoires ROM, selon plusieurs niveaux de robustesse et de complexité.

La figure 11a présente une première solution utilisant deux boîtes S, 1 et deux portes XOR 110, 111 pour reconstruire l'information non masquée $x$ et le nouveau masque $m'$. Ainsi, par la première porte 111, on obtient $x = m \oplus x \oplus m$ et la deuxième porte 112 délivre le nouveau masque $m'$ en sortie de la boîte S' avec $m' = S(x \oplus m) \oplus S(x)$.

Une deuxième solution, illustrée par la figure 11 b utilise une mémoire ROM 113 pour réaliser la logique des portes XOR et la substitution des boîtes S du montage de la figure 11a. La mémoire reçoit alors deux mots, $m$ et $x \oplus m$.

La figure 11 c présente une troisième solution qui peut être appliquée pour une décomposition spatiale sans registre aléatoire 71. Cette solution utilise une mémoire ROM 114 recevant trois mots $x \oplus m$, $m_1$ et $m_2$. Cette mémoire intègre la logique et la fonction 115 réalisées par la mémoire 113 de la solution de la figure 11 b et la loi de groupe $\theta$ pour la reconstruction du masque $m$ en entrée de la fonction 115 ainsi que par exemple que la loi de groupe inverse $\theta^{-1}$ en sortie de cette fonction 115.

## Revendications

**1.** Circuit de cryptographie comportant au moins un registre (R, 22) fournissant une variable x masquée ($x \oplus m$) par une variable de masque ($m$), **caractérisé en ce que** ladite variable masquée est cryptée par une première boîte de substitution S(1) de façon cyclique, ledit circuit comportant un registre de masque (M, 23) délivrant à chaque cycle un masque transformé ($m_t$) lui-même transformé par une fonction de modification (41,61) en la variable de masque $m$, ladite fonction de modification étant une bijection ou une fonction de décomposition, à la fin d'un cycle ladite variable masquée ($x \oplus m$) étant transformée en un nouveau masque ($S(x) \oplus m'$) de ladite variable ($x$), cryptée par la première boîte de substitution S, par un nouveau masque ($m'$), ledit nouveau masque ($m'$) étant calculé en fonction de ladite variable de masque (m) et de ladite variable masquée ($x \oplus m$) à l'aide d'une deuxième boîte de substitution S' (21).

**2.** Circuit selon la revendication 1, **caractérisé en ce que** le nouveau masque transformé m', est introduit dans le registre de masque M après avoir été soumis à la fonction de modification (42, 62) inverse de ladite fonction de modification (41, 61) en sortie de la deuxième boîte de substitution S' (21).

**3.** Circuit selon l'une quelconque des revendications précédentes, **caractérisé en ce que** la fonction de modification est une bijection (41) B telle que le masque transformé $m_t$ est stocké dans le registre M, le masque $m$ appliqué à la boîte de substitution valant B($m_t$) et la nouvelle valeur à stocker dans le registre étant B$^{-1}$($m'$), $m'$étant la sortie de la deuxième boîte de substitution $S'$ (21).

4. Circuit selon l'une quelconque des revendications précédentes, **caractérisé en ce que** la bijection B est telle que le poids de Hamming du masque $m$ n'est pas toujours identique au poids de Hamming de son image par la bijection B($m$).

5. Circuit selon l'une quelconque des revendications 1 à 2, **caractérisé en ce que** la modification du masque m est effectuée par décomposition en deux sous-masque $m_1$ et $m_2$ telle que $m = m_1 \theta m_2$ où $\theta$ est une loi de composition de groupe, le premier sous-masque $m_1$ étant stocké dans un premier registre de masque M1 (231) et le deuxième sous-masque $m_2$ étant stocké dans un deuxième registre de masque M2 (232), la nouvelles valeur à stocker dans le registre M1 étant $m'_1 = m'\theta^{-1} m'_2$ et la nouvelle valeur à stocker étant $m'_2$, $m'$ étant la valeur du masque en sortie de la deuxième boîte de substitution $S'$ (21).

6. Circuit selon l'une quelconque des revendications 1 à 2 et 5, **caractérisé en ce que** la loi de composition est l'opération « ou exclusif » XOR.

7. Circuit selon l'une quelconque des revendications 1,2 et 5, **caractérisé en ce que** la loi de composition est l'opération d'addition.

8. Circuit selon l'une quelconque des revendications 1,2 et 5, **caractérisé en ce que** la loi de composition est l'opération de multiplication.

9. Circuit selon l'une quelconque des revendications 1,2 et 5, **caractérisé en ce que** la loi de composition est l'opération de type s=a*b + (a+b)/2 , * étant la multiplication et + l'addition.

10. Circuit selon l'une quelconque des revendications 1,2 et 5 **caractérisé en ce que** la loi de composition a une distance de Hamming entre deux sous-masque consécutifs $m_2$ d'un cycle à l'autre, $\Delta m_2$, non nulle.

11. Circuit selon la revendication 10, **caractérisé en ce que** les sous-masques $m_1$, $m_2$ ayant un nombre pair de bits, la loi de composition de groupe ($\alpha$) permettant d'obtenir le masque $m$ à partir des sous-masques $m_1$, $m_2$ vérifie :

    - $\Delta m_2$ = 1 par groupes de 2 bits ;
    - $m = m_1 \oplus m_2$ si $m_2$ MSB = 1 ou $m = m_1$ si $m_2$ MSB = 0

$m_2$ MSB, $m_2$ LSB étant respectivement les bits de poids fort et de poids faible du sous-masque $m_2$.

12. Circuit selon l'une quelconque des revendications précédentes sauf 3 et 4, **caractérisé en ce qu'**il comporte un générateur de valeurs aléatoires (71), ledit générateur délivrant la valeur du deuxième sous-masque $m'_2$.

13. Circuit selon l'une quelconque des revendications précédentes sauf 3 et 4, caractérisé en ce sous-masque $m_1$ issu du premier registre de masque M1 est sauvegardé dans le deuxième registre de masque M2 en fin de cycle, le premier registre M1 recevant de son côté le nouveau masque $m'_1$ de façon à reconstruire le nouveau masque complet $m' = m'_1 \theta m'_2$.

14. Circuit selon l'une quelconque des revendications précédentes sauf 3 et 4, **caractérisé en ce que** l'algorithme de cryptage étant du type DES, le chemin des données $x$, $m$ étant scindé en deux parties, gauche (91, 221) et droite (92, 222), ledit circuit comporte en plus du registre de masque gauche ML (91) et du registre de masque droite MR (92) un troisième registre de masque M (93), le registre MR contenant le sous-masque droit $m_{r1}$ et le registre ML contenant le sous-masque gauche $m_{l2}$, le registre M contenant le sous-masque $m_{r2}$ égal au sous-masque $m_{l1}$, les valeurs effectives du masque droit $m_r$ et du masque gauche $m_l$ étant telles que :

    - $m_r = m_{r1} \theta m_{r2}$
    - $m_l = m_{l1} \theta m_{l2}$

15. Circuit selon l'une quelconque des revendications précédentes, **caractérisé en ce que** la deuxième boîte de substitution $S'$ (21) comporte deux boîtes identiques à la première boîte de substitution $S$ (1) et deux portes XOR (111, 112), les sortie des deux boîtes (1) étant connectées à une porte XOR (112) dont la sortie délivre le nouveau masque $m'$, la variable masquée ($x \oplus m$) entrant sur une boîte (1) et sur l'autre porte XOR (111) dont l'autre entrée reçoit le masque *m*, la sortie de cette porte (111) entrant sur l'autre boîte (1).

16. Circuit selon la revendication 15, **caractérisé en ce qu'**une mémoire ROM (113) réalise la logique des portes XOR (111, 112) et la substitution des boîtes (1).

## Patentansprüche

1. Kryptografieschaltung, die wenigstens ein Register (R, 22) umfasst, das eine mit einer Maskenvariablen (*m*) maskierte ($x \oplus m$) Variable x liefert, **dadurch gekennzeichnet, dass** die maskierte Variable auf zyklische Weise mit einer ersten Substitutionsbox *S* (1) codiert wird, wobei die Schaltung ein Maskenregister (M, 23) umfasst, das in jedem Zyklus eine transformierte Maske ($m_t$) liefert, die wiederum durch eine Modifikationsfunktion (41, 61) in die Maskenvariable *m* tranformiert wird, wobei die Modifikationsfunktion eine Bijektions- oder Zerlegungsfunktion ist, wobei die maskierte Variable ($x \oplus m$) am Ende eines Zyklus durch eine neue Maske (*m'*) in eine neue Maske (S*(x)* $\oplus$ *m'*) der Variablen (*x*) transformiert wird, codiert durch die erste Substitutionsbox *S*, wobei die neue Maske (*m'*) in Abhängigkeit von der Maskenvariablen (*m*) und der maskierten Variablen ($x \oplus m$) mittels einer zweiten Substitutionsbox *S'* (21) berechnet wird.

2. Schaltung nach Anspruch 1, **dadurch gekennzeichnet, dass** die neue transformierte Maske $m'_t$ nach dem Unterziehen der Umkehrmodifikationsfunktion (42, 62) der Modifikationsfunktion (41, 61) am Ausgang der zweiten Substitutionsbox *S'*(21) in das Maskenregister M eingegeben wird.

3. Schaltung nach einem der vorherigen Ansprüche, **dadurch gekennzeichnet, dass** die Modifikationsfunktion eine Bijektion (41) B ist, so dass die transformierte Maske $m_t$ im Register M gespeichert wird, wobei die auf die Substitutionsbox angewandte Maske *m* gleich B ($m_t$) ist und der im Register zu speichernde neue Wert B$^{-1}$(*m'*) ist, wobei *m'* der Ausgang der zweiten Substitutionsbox *S'*(21) ist.

4. Schaltung nach einem der vorherigen Ansprüche, **dadurch gekennzeichnet, dass** die Bijektion B derart ist, dass das Hamming-Gewicht der Maske *m* nicht immer mit dem Hamming-Gewicht seines Bildes durch die Bijektion B (*m*) identisch ist.

5. Schaltung nach einem der Ansprüche 1 bis 2, **dadurch gekennzeichnet, dass** die Modifikation der Maske *m* durch Zerlegen in zwei Submasken $m_1$ und $m_2$ erfolgt, so dass $m = m_1 \theta m_2$, wobei θ ein Gruppenverknüpfungsgesetz ist, wobei die erste Submaske $m_1$ in einem ersten Maskenregister M1 (231) und die zweite Submaske $m_2$ in einem zweiten Maskenregister M2 (232) gespeichert wird, wobei der im Register M1 zu speichernde neue Wert $m'_1 = m'\theta^{-1}m'_2$ und der zu speichernde neue Wert $m'_2$ ist, wobei *m'* der Wert der Maske am Ausgang der zweiten Substitutionsbox *S'*(21) ist.

6. Schaltung nach einem der Ansprüche 1 bis 2 und Anspruch 5, **dadurch gekennzeichnet, dass** das Verknüpfungsgesetz die XOR-("exklusiv-oder")-Operation ist.

7. Schaltung nach einem der Ansprüche 1 bis 2 und Anspruch 5, **dadurch gekennzeichnet, dass** das Verknüpfungsgesetz die Addieroperation ist.

8. Schaltung nach einem der Ansprüche 1 bis 2 und Anspruch 5, **dadurch gekennzeichnet, dass** das Verknüpfungsgesetz die Multiplikationsoperation ist.

9. Schaltung nach einem der Ansprüche 1 bis 2 und Anspruch 5, **dadurch gekennzeichnet, dass** das Verknüpfungsgesetz die Operation des Typs s=a*b+(a+b)/2 ist, wobei * Multiplikation und + Addition ist.

10. Schaltung nach einem der Ansprüche 1 bis 2 und Anspruch 5, **dadurch gekennzeichnet, dass** das Verknüpfungsgesetz eine Hamming-Distanz $\Delta m_2$ zwischen zwei konsekutiven Submasken $m_2$ von einem Zyklus zum andern von ungleich null hat.

11. Schaltung nach Anspruch 10, **dadurch gekennzeichnet, dass** die Submasken $m_1$, $m_2$ eine gerade Zahl von Bits haben, wobei das Gruppenverknüpfungsgesetz (α), mit dem die Maske *m* von den Submasken $m_1$, $m_2$ erhalten werden kann, Folgendes verifiziert:

- $\Delta m_2$ = 1 pro Gruppe von 2 Bits;
- $m=m_1 \oplus m_2$, wenn $m_2MSB$=1, oder $m=m_1$, wenn $m_2MSB$=0

wobei $m_2MSB, m_2LSB$ jeweils die höchstwertigen Bits und die niedrigstwertigen Bits der Submaske $m_2$ sind.

12. Schaltung nach einem der vorherigen Ansprüche, ausgenommen Anspruch 3 und 4, **dadurch gekennzeichnet, dass** sie einen Zufallswertegenerator (71) umfasst, wobei der Generator den Wert der zweiten Submaske $m'_2$ liefert.

13. Schaltung nach einem der vorherigen Ansprüche, ausgenommen Ansprüche 3 und 4, **dadurch gekennzeichnet, dass** die vom ersten Maskenregister M1 kommende Submaske $m_1$ im zweiten Maskenregister M2 am Ende des Zyklus gespeichert wird, wobei das erste Register M1 wiederum die neue Maske $m'_1$ empfängt, um die neue komplette Maske $m'=m'_1 \theta m'_2$ zu rekonstruieren.

14. Schaltung nach einem der vorherigen Ansprüche, ausgenommen Ansprüche 3 und 4, **dadurch gekennzeichnet, dass**, da der Codieralgorithmus vom DES-Typ ist, und der Datenpfad $x$, $m$ in zwei Teile unterteilt ist, einen linken Teil (91, 221) und einen rechten Teil (92, 222), die Schaltung zusätzlich zum linken Maskenregister ML (91) und dem rechten Maskenregister MR (92) ein drittes Maskenregister M (93) umfasst, wobei das Register MR die rechte Submaske $m_{r1}$ und das Register ML die linke Submaske $m_{l2}$ enthält, wobei das Register M Submaske $m_{r2}$ gleich Submaske $m_{l1}$ enthält, wobei die effektiven Werte der rechten Maske $m_r$ und der linken Maske $m_l$ derart sind, dass:

- $m_r = m_{rl} \theta m_{r2}$;
- $m_l = m_{l1} \theta m_{l2}$.

15. Schaltung nach einem der vorherigen Ansprüche, **dadurch gekennzeichnet, dass** die zweite Substitutionsbox $S'$ (21) zwei mit der ersten Substitutionsbox $S$ (1) identische Boxen und zwei XOR-Gatter (111, 112) umfasst, wobei die Ausgänge der beiden Boxen (1) mit einem XOR-Gatter (112) verbunden sind, dessen Ausgang die neue Maske $m'$ liefert, wobei die maskierte Variable ($x \oplus m$) in eine Box (1) und das andere XOR-Gatter (111) eingeht, dessen anderer Eingang die Maske m empfängt, wobei der Ausgang dieses Gatters (111) in die andere Box (1) eingeht.

16. Schaltung nach Anspruch 15, **dadurch gekennzeichnet, dass** ein ROM-Speicher (113) die Logik der XOR-Gatter (111, 112) und die Substitution der Boxen (1) realisiert.

## Claims

1. A cryptography circuit comprising at least one register (R, 22) providing a variable $x$ masked ($x \oplus m$) by a mask variable ($m$), **characterised in that** said masked variable is encoded by a first substitution box $S$ (1) in a cyclical manner, said circuit comprising a mask register (M, 23) delivering a transformed mask ($m_t$) at each cycle, which transformed mask ($m_t$) is in turn transformed by a modification function (41, 61) in said mask variable $m$, said modification function being a bijection or a decomposition function, at the end of a cycle said masked variable ($x \oplus m$) being transformed in a new mask ($S(x) \oplus m'$) of said variable ($x$), encoded by said first substitution box $S$, by a new mask ($m'$), said new mask ($m'$) being calculated as a function of said mask variable ($m$) and of said masked variable ($x \oplus m$) using a second substitution box $S'$ (21).

2. The circuit according to claim 1, **characterised in that** the new transformed mask $m'_t$ is introduced into the mask register M after having been subjected to the reverse modification function (42, 62) of said modification function (41, 61) at the output of said second substitution box $S'$ (21).

3. The circuit according to any one of the preceding claims, **characterised in that** said modification function is a bijection (41) B such that the transformed mask $m_t$ is stored in the register M, the mask m applied to the substitution box being equal to B $(m_t)$ and the new value to be stored in the register being B$^{-1}(m')$, m' being the output of said second substitution box $S'$ (21).

4. The circuit according to any one of the preceding claims, **characterised in that** said bijection B is such that the Hamming weight of the mask $m$ is not always identical to the Hamming weight of its image by the bijection B($m$).

5. The circuit according to any one of claims 1 to 2, **characterised in that** the modification of the mask $m$ is carried out by decomposition into two sub-masks $m_1$ and $m_2$, such that $m=m_1\theta m_2$, where $\theta$ is a group composition rule, the

first sub-mask $m_1$ being stored in a first mask register M1 (231) and the second sub-mask $m_2$ being stored in a second mask register M2 (232), the new value to be stored in the register M1 being $m'_1 = m'\theta^{-1} m'_2$ and the new value to be stored being $m'_2$, $m'$ being the value of the mask at the output of said second substitution box $S'$ (21).

6. The circuit according to any one of claims 1 to 2 and claim 5, **characterised in that** the composition rule is the XOR "exclusive or" operation.

7. The circuit according to any one of claims 1 to 2 and claim 5, **characterised in that** the composition rule is the addition operation.

8. The circuit according to any one of claims 1 to 2 and claim 5, **characterised in that** the composition rule is the multiplication operation.

9. The circuit according to any one of claims 1 to 2 and claim 5, **characterised in that** the composition rule is the operation of the type s=a*b+(a+b)/2, * being the multiplication and + being the addition.

10. The circuit according to any one of claims 1 to 2 and claim 5, **characterised in that** the composition rule has a Hamming distance between two consecutive sub-masks $m_2$ from one cycle to the next, $\Delta m_2$, that is non-zero.

11. The circuit according to claim 10, **characterised in that** with the sub-masks $m_1, m_2$ having an even number of bits, the group composition rule ($\alpha$) allowing the mask $m$ to be obtained on the basis of the sub-masks $m_1, m_2$ verifies:

   - $\Delta m_2$ = 1 per group of 2 bits;
   - $m = m_1 \oplus m_2$, if $m_2MSB=1$ or $m=m_1$ if $m_2MSB=0$

   $m_2MSB, m_2LSB$ being, respectively, the high-order bits and low-order bits of the sub-mask $m_2$.

12. The circuit according to any one of the preceding claims, except claims 3 and 4, **characterised in that** it comprises a random values generator (71), said generator delivering the value of the second sub-mask $m'_2$.

13. The circuit according to any one of the preceding claims, except claims 3 and 4, **characterised in that** said sub-mask $m_1$ coming from the first mark register M1 is saved in the second mark register M2 at the end of the cycle, the first register M1 in turn receiving the new mask $m'_1$ so as to reconstruct the new complete mask $m' = m'_1 \, \theta \, m'_2$.

14. The circuit according to any one of the preceding claims, except claims 3 and 4, **characterised in that** with the encoding algorithm being of the DES type, the data path $x$, $m$ being split into two parts, a left part (91, 221) and a right part (92, 222), said circuit comprises, in addition to the left mask register ML (91) and the right mask register MR (92), a third mask register M (93), the register MR containing the right sub-mask $m_{r1}$ and the register ML containing the left sub-mask $m_{l2}$, the register M containing the sub-mask $m_{r2}$ equal to the sub-mask $m_{l1}$, the effective values of the right mask $m_r$ and the left mask $m_l$ being such that:

   - $m_r = m_{rl} \, \theta \, mr2$;
   - $m_l = m_{l1} \, \theta \, m_{l2}$.

15. The circuit according to any one of the preceding claims, **characterised in that** said second substitution box $S'$ (21) comprises two boxes identical to said first substitution box $S$ (1) and two XOR gates (111, 112), the outputs of the two boxes (1) being connected to an XOR gate (112), the output of which delivers the new mask $m'$, the masked variable ($x \oplus m$) entering one box (1) and the other XOR gate (111), the other input of which receives the mask $m$, the output of said gate (111) entering the other box (1).

16. The circuit according to claim 15, **characterised in that** a ROM memory (113) carries out the logic of said XOR gates (111, 112) and the substitution of the boxes (1).

FIG.1a

FIG.1b

FIG.2

FIG.3

FIG.4

FIG.5

FIG.6

FIG.7

FIG.8

FIG.9

FIG.10

XOR et SBox

FIG.11a

ROM_L

FIG.11b

ROM_H

FIG.11c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0161916 A

**Littérature non-brevet citée dans la description**

- Timing Attack on Implementation of Diffie-Hellman, RSA, DSS and other systems. **P.KOCHER et al.** Proceedings of CRYPTO'96, volume 1109 of LNCS. Springer-Verlag, 1996, vol. 1109, 104-113
- **THOMAS S. MESSERGES et al.** Investigations of Power Analysis Attacks on Smartcards. *USENIX - Smartcard'99,* 10 Mai 1999, 151-162
- **S.GUILLEY et al.** Differential Power Analysis Model and some Results. *Proceedings of WCC/CARDIS,* Août 2004, 127-142
- Provably Secure Masking of AES. **J.BLOMER et al.** Proceedings of SAC'04. LNCS, Août 2004, vol. 3357, 69-83
- A generic protection against High-oder differential Power Analysis. **M.AKKAR et al.** Proceedings of FSE'03. LNCS, 2008, vol. 2887
- Enhanced DES implementation secure against differential power analysis in smart-cards. **J.LV et al.** Information Security and Privacy, 10th Australasian Conference. Juillet 2005, vol. 3574, 195-206
- **F-X.STANDAERT et al.** FPGA Implementations of the DES and Triple-DES Masked Against Power Analysis Attack. *Proceedings of FPL 2006,* Août 2006
- Improved Higher-Order Side-Channel Attacks with FPGA Experiments. **E.PEETERS et al.** CHES. LNCS, 2005, vol. 3659, 309-323
- **G.PIRET et al.** Security Analysis of Higher-Order Boolean Masking Schemes for Block Ciphers. *IET Information Security,* 2008, vol. 2 (1), 1-11